(19) **Europäisches Patentamt**
**European Patent Office**
**Office européen des brevets**

(11) **EP 2 504 926 B1**

(12) **FASCICULE DE BREVET EUROPEEN**

(45) Date de publication et mention
de la délivrance du brevet:
**28.08.2013 Bulletin 2013/35**

(21) Numéro de dépôt: **10784503.4**

(22) Date de dépôt: **24.11.2010**

(51) Int Cl.:
***H04B 1/26*** (2006.01)

(86) Numéro de dépôt international:
**PCT/EP2010/068149**

(87) Numéro de publication internationale:
**WO 2011/064267 (03.06.2011 Gazette 2011/22)**

(54) **SYSTEME DE RECEPTION MULTIVOIES INCORPORANT UN RECEPTEUR DE TYPE SUPERHETERODYNE ASSOCIE A DES ANALYSEURS SPECTRAUX A BANDE INSTANTANEE**

MEHRKANALIGES EMPFANGSSYSTEM MIT EINEM SUPERHETERODYN-EMPFÄNGER IM ZUSAMMENHANG MIT SPEKTRALANALYSATOREN MIT MOMENTAN-BANDBREITE

MULTI-CHANNEL RECEPTION SYSTEM INCLUDING A SUPERHETERODYNE-TYPE RECEIVER ASSOCIATED WITH SPECTRAL ANALYSERS WITH INSTANTANEOUS BANDWIDTH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.11.2009 FR 0905640**

(43) Date de publication de la demande:
**03.10.2012 Bulletin 2012/40**

(73) Titulaire: **THALES**
**92200 Neuilly-sur-Seine (FR)**

(72) Inventeurs:
• **JAHAN, Daniel**
**F-29820 Bohars (FR)**

• **CORNU, Cédric**
**F-29200 Brest (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 0 778 678          WO-A1-2009/013314**
**US-A1- 2009 092 177**

**Description**

L'invention porte sur des systèmes de réception multivoies, c'est-à-dire aptes à capter les ondes incidentes à l'aide d'un réseau d'antennes. Il y a alors autant de signaux d'intérêt, c'est-à-dire porteurs d'informations recherchées, que d'antennes, si l'on souhaite acquérir instantanément la totalité des informations.

L'invention est précisément adaptée aux systèmes de réception multivoies à bande instantanée restreinte dans laquelle ils sont aptes à séparer entre elles les différentes fréquences. La bande instantanée est dite restreinte car elle est inférieure (et généralement largement inférieure) à la totalité de la plage couverte dite d'intérêt, par exemple quelques centaines de MHz à comparer à une dizaine de GHz.

Ainsi, étant donné qu'un tel système de réception multivoies possède autant de voies de réception que d'antennes d'intérêt (soit un entier N), il possède donc autant d'analyseurs spectraux. Ces derniers sont utilisés en mesureurs aptes à séparer en fréquence les signaux par la résolution spectrale qu'ils possèdent.

Ces N analyseurs spectraux sont tous identiques. Par ailleurs, chacun possède une bande instantanée restreinte. Cette restriction a deux origines :

- les analyseurs incorporent des convertisseurs analogiques-numériques ayant une bande analogique et une fréquence d'échantillonnage limitées ;
- une capacité de calcul également limitée pour absorber le flux de données en temps réel.

Du fait de l'utilisation de ces analyseurs spectraux, le système de réception utilise des voies de réception dites superhétérodynes. Ces dernières permettent par une transposition en fréquence, de translater une sous-bande de fréquence de la plage d'intérêt vers une bande de fréquence restreinte associée à un filtre de fréquence intermédiaire. Cette bande restreinte correspond à la bande de l'analyseur spectral. Cette opération est répétée au besoin sous-bande par sous-bande de façon à couvrir toute la plage d'intérêt.

En variante, les voies de réception superhétérodynes sont très généralement à double changements de fréquence de façon à couvrir une large bande de fréquence d'intérêt tout en traitant les problèmes de fréquences images. Autrement dit, la translation de la sous-bande de fréquence vers la bande restreinte se fait très généralement en deux étapes.

On note que les translations effectuées sont identiques pour toutes les voies de réception superhétérodynes du système de réception.

La bande instantanée du système de réception est celle des analyseurs spectraux que le système de réception incorpore. Celle-ci est donc limitée à quelques centaines de MHz. Etant donné que le système de réception doit fonctionner sur une plage d'intérêt beaucoup plus grande (par exemple une dizaine de GHz), cela implique que certains signaux fugaces ne sont pas nécessairement interceptés, et donc qu'il y a une notion probabiliste dans l'interception (cf. probabilité d'interception).

Le document WO2009/013314 décrit un récepteur compact large bande instantanée comprenant un nombre N de chemins d'interceptions de signaux électriques. Chaque chemin comprend des moyens digitaux pour extraire l'information comprise dans les signaux interceptés.

Un but de l'invention est notamment de résoudre le problème précité en améliorant la probabilité d'interception du système de réception.

A cet effet, selon un premier aspect de l'invention, il est proposé un système de réception comprenant un récepteur de type superhétérodyne couplé à un moyen de traitement, le récepteur comprenant un nombre N d'antennes, chacune étant apte à capter des signaux représentatifs d'ondes incidentes sur une plage de fréquence d'intérêt donnée et à délivrer des signaux correspondants, N étant un entier.

Selon une caractéristique générale de ce premier aspect, ledit récepteur comprend :

- N moyens de translation, chacun étant apte :

  - à translater en fréquence des signaux délivrés par l'antenne considérée, d'une sous-bande de fréquence de la plage d'intérêt (la sous-bande étant dite bande instantanée du récepteur) vers une bande de fréquence restreinte, et
  - à multiplexer en fréquence les signaux appartenant à ladite sous-bande de fréquence,

- N premiers filtres passe-bande de fréquence intermédiaire identiques, de largeur de bande égale à ladite bande de fréquence restreinte, respectivement couplés en sortie de chaque moyen de translation, et aptes à filtrer les signaux translatés et multiplexés,
- un moyen de couplage apte à sommer les N signaux filtrés de façon à délivrer l'ensemble des signaux sommés via N sorties.

Le moyen de traitement comprend N autres moyens de translation couplés à N autres filtres passe-bande de fréquence intermédiaire identiques entre elles et différentes des fréquences intermédiaires des N premiers filtres passe-bande et de largeur de bande de fréquence égale à L, eux-mêmes couplés à N analyseurs spectraux, ayant tous la même bande de fréquence d'analyse restreinte de largeur L.

Chaque autre moyen de translation de rang i, i étant un entier variant de 1 à N, est apte à transposer les signaux délivrés par le moyen de couplage à l'aide d'un signal de translation ayant une fréquence adaptée à chaque autre moyen de translation, de façon que l'autre filtre passe-bande de fréquence intermédiaire connecté en sortie dudit autre moyen de translation, soit apte à filtrer la i$^{\text{ème}}$ sous-bande de la bande de fréquence totale de largeur L.N, à laquelle appartiennent les signaux sommés par le moyen de couplage.

En d'autres termes, la première translation effectuée par les moyens de translation permet de disperser ou de multiplexer les N voies en fréquence. La seconde translation effectuée par les autres moyens de translation permet d'étaler la totalité de la bande instantanée à recevoir sur les N analyseurs spectraux. Cela est rendu possible par le pouvoir séparateur en fréquence des analyseurs spectraux apte à isoler les N signaux dispersés volontairement en fréquence pour les analyser en parallèle.

Un tel dispositif utilisant N analyseurs spectraux, chacun ayant une bande instantanée L, est apte à travailler sur une bande instantanée N fois plus grande (N.L).

Mais cela peut aussi permettre d'utiliser des analyseurs spectraux à bande instantanée réduite, pour des questions de coût ou de résolution en dynamique (nombre de bits), tout en offrant une bande instantanée effective acceptable.

Selon un mode de réalisation, chaque analyseur spectral est également apte à analyser techniquement les signaux filtrés par les autres filtres passe-bande de fréquence intermédiaire, et à délivrer en sortie des caractéristiques techniques.

Selon un mode de réalisation, chaque moyen de translation de rang i est apte à translater en fréquence les signaux délivrés par l'antenne correspondante d'une valeur égale à :

$$f_0 + \Delta f_i \, ,$$

où :

- $f_0$ est une valeur de fréquence commune à chacun des moyens de translation, et
- $\Delta f_i$ est un décalage en fréquence propre à chaque moyen de translation.
  De préférence, les décalages $\Delta f_i$ propres à chaque moyen de translation de rang i sont définis tels que :

$$\Delta f_{i+1} \geq \Delta f_i + \Delta f_{spectre} \, ,$$

où
- $\Delta f_i$ est le décalage en fréquence réalisé par le moyen de translation de rang i,
- $\Delta f_{i+1}$ est le décalage en fréquence réalisé par le moyen de translation de rang i+1, et
- $\Delta f_{spectre}$ est la largeur du spectre des signaux mis en oeuvre par ledit système.

Selon un mode de réalisation, le récepteur peut comprendre en outre N lignes-à-retard respectivement couplées entre la sortie de l'un des N moyens de translation et le coupleur, chaque ligne-à-retard étant apte à retarder le signal translaté et multiplexé en fréquence par le moyen de translation auquel elle est associée, d'un retard temporel qui lui est propre.

De préférence, chaque retard $\tau_i$ de chaque ligne-à-retard, i variant entre 1 et N est défini tel que :

$$\tau_{i+1} \geq \tau_i + Max(LI + \tau_{prop}) \, ,$$

où :

- LI est la largeur de l'impulsion considérée, retardée par la ligne de retard de rang i, et
- $\tau_{prop}$ est le retard de propagation maximal entre deux antennes.

Selon un mode de réalisation, ledit moyen de traitement peut comprendre en outre :

- un moyen auxiliaire apte à regrouper les caractéristiques techniques délivrées par les analyseurs spectraux correspondant à une même onde incidente,
- un moyen de caractérisation technique des impulsions, couplé en sortie du moyen auxiliaire, apte à analyser techniquement chaque impulsion à partir des caractéristiques techniques délivrées par les analyseurs spectraux.

Selon un deuxième aspect de l'invention, il est proposé une utilisation d'un système tel que mentionné ci-avant pour effectuer une goniométrie.

D'autres avantages et caractéristiques de l'invention apparaîtront à l'examen de la description détaillée d'un mode de réalisation de l'invention, nullement limitatif, et de dessins annexés sur lesquels :

- la figure 1 illustre un mode de réalisation de l'invention,
- la figure 2 représente des signaux mis en oeuvre par le mode de réalisation de la figure 1,
- la figure 3 illustre plus en détail le fonctionnement du mode de réalisation de la figure 1,
- la figure 4 illustre un mode de réalisation d'un coupleur incorporé dans l'invention, et
- la figure 5 illustre de manière simplifiée le fonctionnement d'un coupleur selon l'invention.

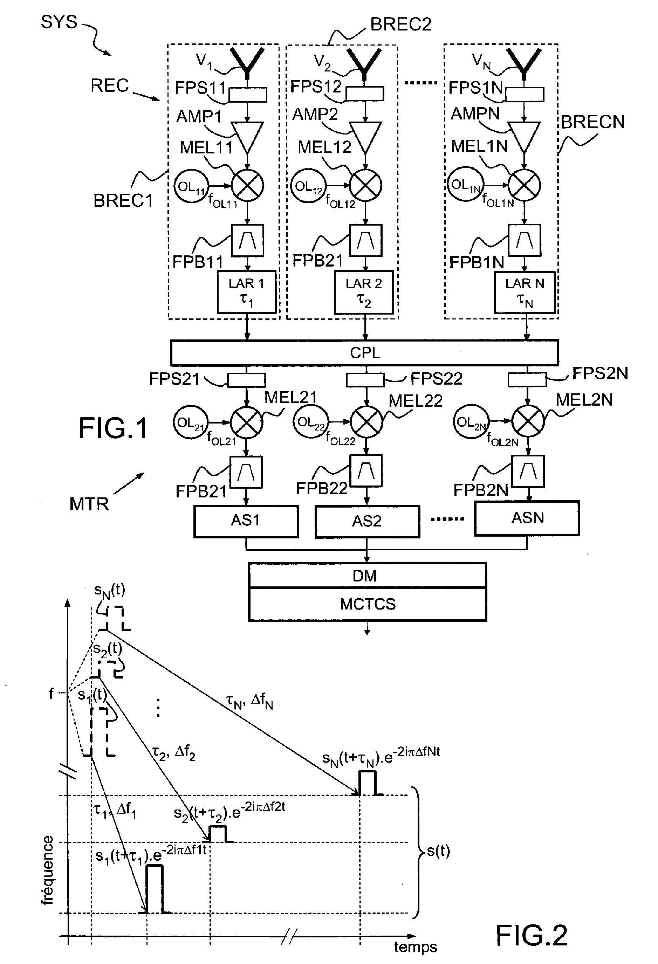

On se réfère à la figure 1. La référence SYS désigne un système de réception multivoies selon un premier mode de réalisation de l'invention. Le système SYS comprend un récepteur de type superhétérodyne REC couplé à un moyen de traitement MTR.

Un récepteur de type superhétérodyne permet de restreindre la bande de fréquence à une valeur acceptable par un analyseur spectral.

Le récepteur REC comprend N blocs de réception BREC1, ..., BRECN, N étant un entier. Chaque bloc de réception BREC1, ..., BRECN comprend une antenne respectivement référencée $V_1$, ..., $V_N$. Dans ce cas, les antennes $V_1$, ..., $V_N$ sont par exemple équidistantes. Chaque antenne $V_1$, ..., VN est apte à capter un signal représentatif d'ondes incidentes, dont la fréquence appartient à une plage d'intérêt liée à l'utilisation du système SYS.

Par exemple, si le système SYS est incorporé au sein d'un détecteur de radar, cette plage peut être de 2 à 18 GHz.

On note qu'en variante, il est possible d'associer un seuil de détection à chaque antenne, de façon à ne considérer que les signaux reçus dont la puissance dépasse le seuil de détection.

On considère dans cet exemple que chaque signal capté par une antenne est une brève impulsion.

La sortie de chaque antenne $V_1$, ..., $V_N$ est connectée à un filtre de présélection FPS11, ..., FPS1N. Ces derniers ont pour fonction de ne prélever qu'une partie de la bande de fréquences totale, de façon qu'en sortie des mélangeurs décrits ci-après, il n'y ait pas d'apparition de fréquence indésirable dans la bande de fréquence résultante.

La sortie de chaque filtre de présélection FPS11, ..., FPS1 N est reliée à un amplificateur, respectivement référencé AMP1,..., AMPN.

Chaque amplificateur AMP1,..., AMPN est apte à amplifier les impulsions délivrées par le filtre à laquelle il est couplé.

Chaque bloc de réception BREC1, .., BRECN comprend un premier ensemble d'oscillateurs locaux $OL_{11}$,..., $OL_{1N}$. Les oscillateurs locaux $OL_{11}$,..., $OL_{1N}$ peuvent être formés par ceux classiquement incorporés au sein des récepteurs de type superhétérodyne, mais ils doivent avoir des réglages indépendants les uns des autres pour pouvoir réaliser la loi de multiplexage en fréquence.

Chaque oscillateur local $OL_{11}$,..., $OL_{1N}$ est respectivement couplé à l'entrée d'un mélangeur MEL11, ..., MEL1 N (moyens de translation), l'autre entrée de celui-ci recevant la sortie d'un amplificateur AMP1, ..., AMPN.

Plus précisément, chaque oscillateur local $OL_{11}$,..., $OL_{1N}$ délivre un signal à une fréquence donnée $f_{OL11}$,..., $f_{OL1N}$ de façon à translater en fréquence les impulsions amplifiées, chacune d'elles étant délivrée par l'amplificateur correspondant AMP1, ..., AMPN, vers une bande de fréquence restreinte choisie, fonction du traitement effectué en aval. Cette translation en fréquence sera expliquée plus en détail ci-après.

Les valeurs des fréquences $f_{OL11}$,..., $f_{OL1N}$ sont variables en fonction de la sous-bande de fréquences à laquelle appartiennent les fréquences des signaux reçus.

Plus précisément, comme expliqué plus en détail ci-après :

$$f_{OL1i} = f_0 + \Delta f_i,$$

où :

- $f_0$ est une valeur de fréquence commune à chacun des moyens de translation, et
- $\Delta f_i$ est un décalage en fréquence propre à chaque moyen de translation.

On signale qu'il est préférable que le critère de fonctionnement suivant soit respecté, pour préserver l'intégrité spectrale des signaux considérés :

$$\Delta f_{i+1} \geq \Delta f_i + \Delta f_{spectre} ,$$

, où

- $\Delta f_i$ est le décalage en fréquence réalisé sur le signal de sortie du mélangeur de rang i, et
- $\Delta f_{spectre}$ est la largeur du spectre des signaux reçus par le système SYS.

Autrement dit, ce critère permet que les signaux multiplexés et translatés en fréquence puissent être sommés sans que les spectres respectifs se chevauchent. Ils pourront donc être extraits par filtrage en fréquence.

En sortie du mélangeur MEL11, ..., MEL1N, chaque impulsion est donc décalée en fréquence et appartient en conséquence à une bande de fréquence restreinte choisie, cette bande de fréquence restreinte étant identique pour chaque bloc de réception du système de réception SYS.

Chaque impulsion est alors délivrée à un premier filtre passe-bande dit de fréquence intermédiaire FPB11, ..., FPB1N, identiques sur les N blocs de réception (par exemple avec une bande passante comprise entre 3,5 et 5,5 GHz) de façon à :

- d'une part restreindre la bande de fréquence amenée vers la suite du circuit, et
- d'autre part, ne garder que le produit souhaité à l'issue du mélangeur.

La sortie de chaque premier filtre FPB11, ..., FPB1N est respectivement couplée à une ligne-à-retard LAR1, ..., LARN. Cette ligne-à-retard a pour rôle de retarder, si besoin, l'impulsion amplifiée d'un retard choisi, $\tau_i$. Ce retard est défini plus en détail ci-après.

En d'autres termes, les lignes-à-retard LAR1, ..., LARN et le coupleur CPL permettent de réaliser un multiplexage dans le temps selon les retards $\tau_i$.

Les sorties de l'ensemble des lignes-à-retard sont couplées au moyen de traitement MTR et plus particulièrement reliées à un coupleur CPL incorporé au sein du moyen de traitement MTR. Ce dernier, unique pour l'ensemble des N impulsions délivrées par les lignes-à-retard LAR1, ..., LARN, a pour fonction de sommer les impulsions multiplexées en fréquence et en temps de façon à former et délivrer un seul et unique signal renfermant toutes les informations utiles. Un exemple d'architecture du coupleur CPL sera décrit plus en détail ci-après.

Ainsi, en sortie du coupleur CPL, comme représenté sur la figure 2, le signal s(t) délivré est formé d'impulsions $s_i(t+\tau_i).e^{-2i\pi\Delta fit}$, décalées en temps et en fréquence (i étant compris entre 1 et N). On rappelle que $\Delta f_i$ représente l'écart de fréquence entre la valeur initiale de la fréquence de l'impulsion de rang i, $S_i(t)$, et la valeur de la fréquence finale après la translation en fréquence effectuée par l'oscillateur local $OL_{1i}$.

Par ailleurs, si besoin par la suite, pour que les impulsions ne se recouvrent pas au moment du couplage, le retard $\tau_i$ inséré par chaque ligne de retard doit alors respecter de préférence la condition ci-dessous :

$$\tau_{i+1} \geq \tau_i + Max(LI + \tau_{prop}) ,$$

où :

- LI est la largeur de l'impulsion considérée, retardée par la ligne de retard de rang i, et
- $\tau_{prop}$ est le retard de propagation maximal entre deux antennes.

Toutefois, cette condition n'est absolument pas nécessaire.

Le temps de propagation $\tau_{prop}$ est lié au décalage dans l'espace d'une antenne par rapport à l'autre au sein du système. De cette façon, l'intégrité temporelle de chaque impulsion est préservée.

On se réfère à nouveau à la figure 1.

A titre d'exemple, les lignes-à-retard LAR1, ..., LARN et le coupleur CPL peuvent être réalisés à l'aide de dispositifs de transformation hyper-optiques bien connu de l'homme du métier. L'avantage de ce type de dispositif pour les lignes-à-retard LAR1, ..., LARN est de pouvoir facilement mettre en oeuvre des retards élevés. En outre ils engendrent peu de pertes pour les signaux traités et minimisent l'encombrement.

En variante, les lignes-à-retard LAR1, ..., LARN peuvent être ajustables par plots (technique bien connue de l'homme du métier), de manière à permettre un paramétrage en fonction du besoin.

Le coupleur CPL comprend N sorties chacune étant connectée à un filtre de présélection FPS21, ..., FPS2N. Comme les filtres de présélection précédents, ces derniers ont pour fonction de ne prélever qu'une partie de la bande de fréquence totale, de façon qu'en sortie des autres mélangeurs décrits ci-après, il n'y ait pas d'apparition de fréquence indésirable dans la bande de fréquence résultante.

Ainsi, les sorties des filtres de présélection FPS21, ..., FPS2N sont connectées à d'autres mélangeurs respectivement référencés MEL21, ..., MEL2N. Le coupleur CPL somme l'ensemble des impulsions qu'il reçoit des lignes-à-retard LAR1, ..., LARN.

Chacun de ces autres mélangeurs MEL21, ..., MEL2N (autres moyens de translation) reçoit sur une entrée un signal à une fréquence donnée $f_{OL21}$, ..., $f_{OL2N}$ choisie, de façon à translater les signaux reçus du coupleur de la valeur de la fréquence considérée $f_{OL21}$, ..., $f_{OL2N}$.

Chacun de ces signaux est délivré par une autre série d'oscillateurs locaux $OL_{21}$, ..., $OL_{2N}$.

Les valeurs des fréquences $f_{OL21}$, ..., $f_{OL2N}$ sont différentes. Elles sont choisies de façon que pour chaque voie, une sous-bande différente appartenant à la bande de fréquence totale à laquelle appartiennent les impulsions délivrées par le coupleur CPL, soit filtrée par un autre filtre passe-bande de fréquence intermédiaire couplé en aval.

Plus précisément, si l'on considère que la bande de fréquence totale à laquelle appartiennent les impulsions délivrées par le coupleur CPL peut être divisée en N sous-bandes, la bande de fréquence totale est translatée en fréquence d'une valeur choisie à l'aide d'un mélangeur MEL21, ..., MEL2N de façon que chaque sous-bande translatée puisse être filtrée par l'un des filtres passe-bande de fréquence intermédiaire FPB21, ..., FPB2N.

Ces autres filtres passe-bande FPB21, ..., FPB2N sont tous similaires d'une voie à l'autre et d'une bande de fréquence restreinte.

Cette bande de fréquence est définie par un analyseur spectral AS1, ..., ASN couplé en sortie du filtre passe-bande correspondant FPB21, ..., FPB2N.

Classiquement, chaque analyseur spectral correspond à un banc de filtres apte à séparer des signaux suffisamment éloignés en fréquence.

Chaque analyseur spectral fournit un ensemble de caractéristiques techniques aptes à décrire le signal considéré.

Par exemple, ces caractéristiques techniques peuvent comprendre la fréquence centrale du spectre, son éventuelle loi de modulation (en fréquence ou en phase), son amplitude ou sa puissance, sa durée ou largeur si c'est une impulsion, sa date d'arrivée.

Ces caractéristiques techniques sont alors envoyées à un moyen auxiliaire, ici un moyen de démultiplexage DM.

Par ailleurs, le moyen auxiliaire DM travaille sur une fenêtre temps-fréquence définie selon les plus grands des écarts de retards et des écarts de décalages de fréquence, soit :

$$\left[Max(\tau_i - \tau_k), Max(\Delta f_i - \Delta f_k)\right].$$

Le démultiplexage des données permet de grouper les analyses des impulsions appartenant à une même onde captée en parallèle par plusieurs antennes et issues des multiplexages en fréquence et en temps à l'aide respectivement, des décalages en fréquences Δfi des retards $\tau_i$. Selon le type de réseau d'antennes et la puissance de l'onde incidente, en particulier dans le cas d'un réseau circulaire (antennes directives pointées dans des directions différentes), certaines antennes pourront délivrer des signaux ayant un niveau de puissance inexploitable faisant que, à l'issue du regroupement opéré par le moyen auxiliaire, celui-ci ne donnera pas nécessairement N analyses techniques d'impulsions.

Le regroupement des analyses techniques d'impulsion par le moyen auxiliaire DM se fait :

- sur une fenêtre glissante de corrélation, à la fois sur le temps et sur la fréquence de façon à veiller le temps qui passe et à balayer la bande de fréquences à laquelle appartiennent les impulsions délivrées par le coupleur CPL,
- par ressemblance des paramètres techniques stables, c'est-à-dire ceux qui ne dépendent pas du réseau antennaire et de la direction d'arrivée de l'onde sur celui-ci.

Plus précisément, le démultiplexage réalisé par le moyen auxiliaire DM (c'est-à-dire l'association des N impulsions issues des N antennes et correspondant à la même onde interceptée) se fait par corrélation.

Celle-ci ne peut se faire que sur des caractéristiques invariantes dans chacune des N impulsions et sur la reconnaissance des lois de multiplexage en temps et en fréquence. Les caractéristiques invariantes sur les N impulsions sont celles qui sont propres à l'onde, indépendamment de toute considération géométrique liée au réseau d'antennes et à son illumination par l'onde incidente. C'est ainsi que la puissance, la date d'arrivée et la phase des impulsions ne sont pas des invariants, mais sont des caractéristiques porteuses, respectivement d'illuminations relatives différentes dues aux diagrammes de rayonnement et aux différences de marche.

Le principe général du démultiplexage se fait par le regroupement (ou tri) des impulsions, basé sur la similitude de leurs caractéristiques techniques invariantes et la similitude des distributions relatives des fréquences et des dates d'arrivée par rapport aux lois de multiplexage respectives qui sont connues.

Pour ce faire, on réalise des opérations mathématiques de comparaison de valeurs de grandeurs de même nature. Comme ces valeurs sont issues à la fois de mesures et de définitions matérielles, il convient de réaliser les comparaisons en tenant compte de tolérances liées, respectivement, aux erreurs de mesures et aux définitions matérielles. Ces opérations sont similaires à celles utilisées dans les fonctions de fusion, classification, pistage, etc... Elles sont considérées comme classiques et connues de l'homme de l'art.

Finalement, le moyen auxiliaire DM est couplé à un moyen de caractérisation technique consolidée et goniométrique des impulsions MCTCS. Ce dernier a pour fonction d'estimer à partir des analyses techniques des impulsions (ou des signaux élémentaires) regroupées (au maximum N) délivrées par le moyen auxiliaire DM :

- d'une part la direction d'arrivée (goniométrique) des ondes incidentes par des techniques classiques utilisant la distribution des puissances, la distribution des dates d'arrivée réelles (c'est-à-dire compensées des retards $\tau_i$), la distribution des phases (sous réserve d'être capable de compenser les variations de phases issues des différences de fréquence et des différences de temps, et
- d'autre part de paramètres techniques affinés car issus de l'ensemble des mesures caractérisant l'onde incidente reçues par les antennes $V_1$, ..., $V_N$.

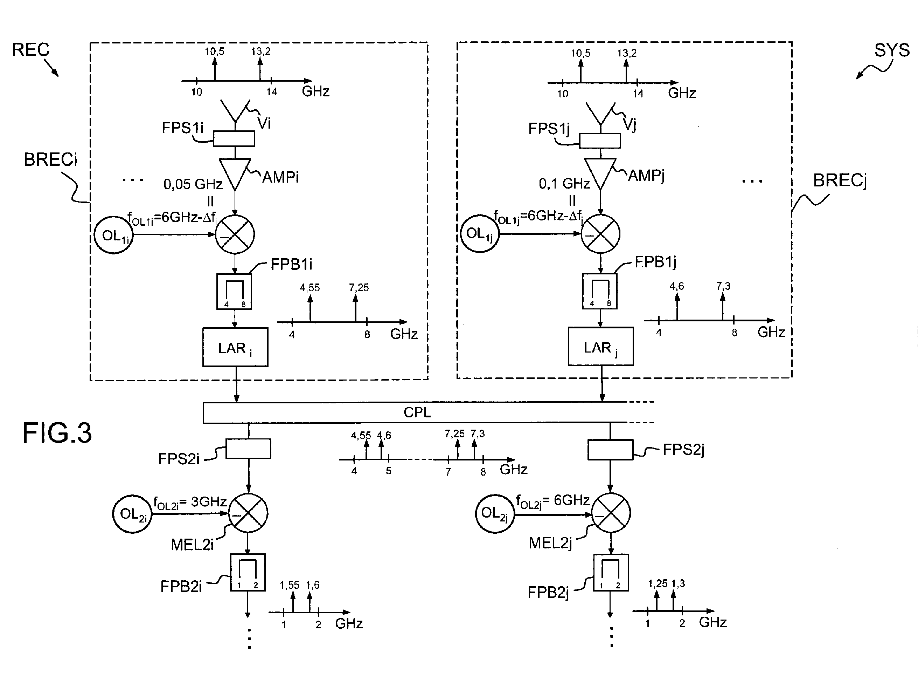

On se réfère à présent à la figure 3 qui illustre plus en détail un exemple de fonctionnement du système de réception selon l'invention.

Dans cet exemple, on ne considère que deux blocs de réception BRECi et BRECj, à des fins de simplification. On s'intéresse à une sous bande de fréquence de la toute la plage d'intérêt. Cette sous-bande de fréquence est comprise entre 10GHz et 14GHz. Chaque antenne $V_i$ et $V_j$ des blocs de réception BRECi et BRECj capte deux ondes incidentes aux fréquences respectives de 10,5 GHz et 13,2 GHz. Ces ondes sont chacune amplifiées par les amplificateurs AMPi et AMPj après que les filtres de présélection FPB1i, FPB1j aient prélevé la partie adéquate de la bande totale.

Une première translation fréquentielle est effectuée à l'aide des d'oscillateurs locaux $OL_{1i}$ et $OL_{1j}$. Les fréquences de translation $f_{OLi}$ et $f_{OLj}$ sont choisies de façon à translater la sous-bande de fréquence précitée au niveau de la bande de fréquence restreinte des filtres passe-bande à fréquence intermédiaire FPB1i et FPB1j, qui est ici comprise entre 4 et 8GHz. Cette translation fréquentielle a également pour but d'introduire un multiplexage des signaux en fréquence (comme on peut le voir sur la figure 2) de façon à permettre la séparation de ces derniers au cours de l'analyse.

Ce multiplexage est effectué à l'aide de décalage fréquentiels $\Delta f_i$, $\Delta f_j$.

Ainsi, pour cet exemple, pour le bloc de réception BRECi, le décalage fréquentiel est égal à 6GHz-$\Delta f_i$, où $\Delta f_i$ est égal à 0,05GHz. Les signaux résultants ont alors pour fréquence 4,55GHz et 7,25GHz.

Pour le bloc de réception BRECj, le décalage fréquentiel est égal à 6GHz-Ä$f_j$, où $\Delta f_j$ est égal à 0,1 GHz. Ainsi, les signaux résultants ont pour fréquence 4,6GHz et 7,3GHz.

Les signaux décalés en fréquence sont filtrés, respectivement par les filtres passe-bande à fréquence intermédiaires FPB1i et FPB1j. Dans cet exemple, les signaux sont également retardés temporellement par les lignes-à-retard LARi et LARj, de façon à effectuer un multiplexage dans le temps.

Puis le coupleur CPL somme l'ensemble des impulsions multiplexées en temps et en fréquence. Les filtres de présélection FPS2i et FPS2j prélèvent la bande de fréquence adéquate, ce qui évite par la suite tout repliement de spectre.

Puis est effectuée la deuxième translation fréquentielle. Celle-ci a pour but que la bande de fréquence à laquelle appartiennent les impulsions délivrées par le coupleur CPL soient filtrées par la série de filtre passe-bande de fréquence intermédiaire couplés en aval.

Dans cet exemple, on ne considère que les sous-bandes comprises entre 4 et 5GHz et 7et 8GHz, car on ne considère que deux filtres passe-bande. En réalité, pour filtrer toute la bande de fréquence, il faudrait considérer quatre filtres passe-bande de fréquence intermédiaire.

Mais pour simplifier la description, on ne s'attache qu'aux deux sous-bandes précitées.

Pour que la première sous-bande entre 4 et 5GHz puisse être filtrée par le filtre passe-bande de fréquence intermédiaire FPB2i, la bande de fréquence en sortie du coupleur CPL est translatée de $f_{OL2i}$=3GHz.

Le filtrage par le filtre FPB2i permet de conserver les impulsions dont les fréquences translatées sont à présent égales à 1,5 et 1,6GHz.

De même, pour que la deuxième sous-bande entre 7 et 8GHz puisse être filtrée par le filtre passe-bande de fréquence intermédiaire FPB2j, la bande de fréquence en sortie du coupleur CPL est translatée de $f_{OL2i}$=6GHz.

Le filtrage par le filtre FPB2i permet de conserver les impulsions dont les fréquences translatées sont à présent égales à 1,2 et 1,3GHz.

Le nombre de sorties du coupleur CPL et donc le nombre de sous-bandes de fréquence « issues » de la bande totale sont fonction du nombre de fois qu'est répétée la bande de fréquence restreinte (de largeur L) correspondant à la bande instantanée d'analyse de chaque filtre passe-bande de fréquence intermédiaire au sein de la bande de fréquence à laquelle appartiennent les impulsions délivrées par le coupleur CPL

Dans cet exemple, cette largeur de bande L est égale à 1 GHz.

La largeur totale de la bande que le système est apte à analyser est donc égale à N.L, N étant le nombre de sorties du coupleur CPL.

Les dispositifs de l'art antérieur, devant acquérir la perception d'une onde sur N voies, possèdent très généralement N de voies d'analyse identiques, disposées en parallèle, chacune ayant une bande instantanée donnée.

L'invention a pour avantage d'augmenter la bande instantanée de réception du système de réception, ce qui améliore l'interception et la probabilité associée.

En variante, il est possible d'effectuer le décalage et le même multiplexage en fréquence sur un regroupement de blocs de réception. Si le système de réception comprend p regroupements de voies, le moyen de couplage étant alors formé de p sous-coupleurs, aptes à sommer les sorties du regroupement de blocs de réception.

Un analyseur spectral et un filtre passe-bande de fréquence intermédiaire associé est alors couplé à la sortie de chacun des p sous-coupleurs.

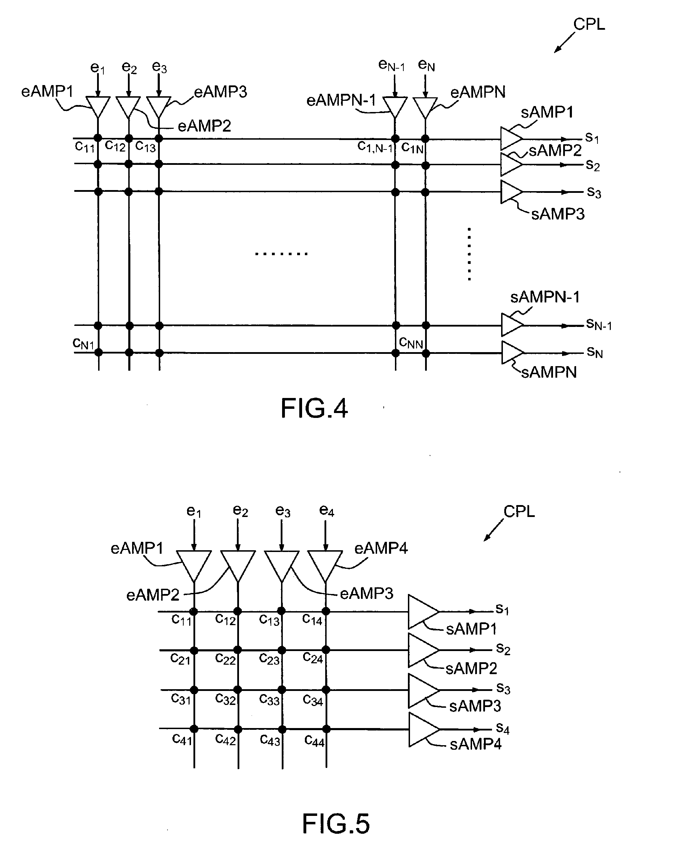

Cette variante est possible grâce à une structure adaptée du coupleur CPL, dont un exemple est illustré sur la figure 4.

Chaque entrée référencée e1, ..., eN reçoit le signal de sortie délivré par la ligne-à-retard LAR1, ..., LARN à laquelle elle est connectée. Chaque entrée est associée à un amplificateur eAMP1, ..., eAMPN apte à amplifier le signal d'entrée.

Chaque sortie référencée s1, ..., s N est reliée à l'entrée d'un filtre de présélection FPS21, ..., FPS2N. Chaque sortie est associée à un amplificateur de sortie sAMP1, ..., sAMPN apte à amplifier le signal avant qu'il ne soit délivré en sortie du coupleur CPL.

A l'interconnexion de chaque ligne de rang i et colonne de rang j est disposé un commutateur Cij. Celui-ci permet d'établir la connexion entre l'entrée associée à la colonne i et la sortie associée à la ligne j.

La figure 5 illustre le fonctionnement d'un tel coupleur CPL. De façon à simplifier la description, on considère un coupleur CPL avec seulement quatre entrées e1, ..., e4 et quatre sorties s1, ..., s4.

On considère qu'un commutateur Cij (i et j variant chacun entre 1 et 4) connecte une entrée et une colonne lorsque son état est à « 1 » et la déconnecte lorsque son état est à « 0 » (logique positive).

Il existe trois configurations possibles.

a) La première configuration permet de traiter tous les spectres reçus en « parallèle », ce qui correspond à la configuration classique, utilisée dans l'état de l'art. Dans ce cas, il vient :

$$\begin{cases} Cij = 1 & \forall i = j \\ Cij = 0 & \forall i \neq j \end{cases}.$$

b) La deuxième configuration permet de traiter tous les spectres en série, ce qui correspond à la configuration décrite ci-dessus. Dans ce cas, il vient : $Cij = 1 \ \forall i \ et \ j.$

c) La troisième configuration dite série-parallèle est intermédiaire, elle fait partie du champ de l'invention. Dans ce cas il vient pour quatre voies :

$$\begin{cases} C11 = C12 = C21 = C22 = 1 \\ C13 = C14 = C23 = C24 = 0 \end{cases} \text{sérialisation des sorties s1 et s2 ;}$$

$$\begin{cases} C31 = C32 = C41 = C42 = 0 \\ C33 = C34 = C43 = C44 = 1 \end{cases} \text{sérialisation des sorties s3 et s4.}$$

**Revendications**

1. Système de réception (SYS) comprenant un récepteur (REC) de type superhétérodyne couplé à un moyen de traitement (MTR), le récepteur comprenant un nombre N d'antennes ($V_1$, ..., $V_N$), chacune étant apte à capter des signaux représentatifs d'ondes incidentes sur une plage d'intérêt donnée et à délivrer des signaux correspondants, N étant un entier, **caractérisé par le fait que** ledit récepteur (REC) comprend :

   - N moyens de translation (MEL11, ... MEL1N), chacun étant apte :

      • à translater en fréquence des signaux délivrés par l'antenne considérée, d'une sous-bande de fréquence de la plage d'intérêt vers une bande de fréquence restreinte, et
      • à multiplexer en fréquence les signaux appartenant à ladite sous-bande de fréquence,

   - N premiers filtres passe-bande de fréquence intermédiaire identiques (FPN11, ..., FP1N), de largeur de bande égale à ladite bande de fréquence restreinte, respectivement couplés en sortie de chaque moyen de translation, et aptes à filtrer les signaux translatés et multiplexés,
   - un moyen de couplage (CPL) apte à sommer les N signaux filtrés de façon à délivrer l'ensemble des signaux sommés via N sorties,
   et **par le fait que** le moyen de traitement (MTR) comprend N autres moyens de translation (MEL21, ..., MEL2N) couplés à N autres filtres passe-bande de fréquence intermédiaire identiques entre elles et différentes des fréquences intermédiaires des N premiers filtres passe-bande (FPB21, ..., FPB2N) et de largeur de bande de fréquence égale à L, eux-mêmes couplés à N analyseurs spectraux (AS1, ..., ASN), ayant tous la même bande de fréquence d'analyse restreinte de largeur L,
   chaque autre moyen de translation (MEL21, ..., MEL2N) de rang i, i étant un entier variant de 1 à N, étant apte à transposer les signaux délivrés par le moyen de couplage (CPL) à l'aide d'un signal de translation ayant une fréquence adaptée à chaque autre moyen de translation, de façon que l'autre filtre passe-bande de fréquence intermédiaire connecté en sortie dudit autre moyen de translation, soit apte à filtrer la i$^{\text{ème}}$ sous-bande de la bande de fréquence totale de largeur L.N, à laquelle appartiennent les signaux sommés par le moyen de couplage (CPL).

2. Système selon la revendication précédente, dans lequel chaque analyseur spectral (AS1, ..., ASN) est également apte à analyser techniquement les signaux filtrés par les autres filtres passe-bande de fréquence intermédiaire (FPB21, ..., FPB2N), et à délivrer en sortie des caractéristiques techniques.

3. Système selon l'une des revendications précédentes, dans lequel chaque moyen de translation de rang i est apte à translater en fréquence les signaux délivrés par l'antenne correspondante d'une valeur égale à :

$$f_0 + \Delta f_i ,$$

où :

   - $f_0$ est une valeur de fréquence commune à chacun des moyens de translation, et
   - $\Delta f_i$ est un décalage en fréquence propre à chaque moyen de translation.

4. Système selon la revendication précédente, dans lequel les décalages $\Delta f_i$ propres à chaque moyen de translation de rang i (MEL11, ... MEL1N) sont définis tels que :

$$\Delta f_{i+1} \geq \Delta f_i + \Delta f_{spectre} ,$$

où

   - $\Delta f_i$ est le décalage en fréquence réalisé par le moyen de translation de rang i,
   - $\Delta f_{i+1}$ est le décalage en fréquence réalisé par le moyen de translation de rang $_{i+1}$, et
   - $\Delta f_{spectre}$ est la largeur du spectre des signaux mis en oeuvre par ledit système.

5. Système selon l'une des revendications précédentes, dans lequel le récepteur (REC) comprend en outre N lignes-à-retard (LAR1, ..., LARN) respectivement couplées entre la sortie de l'un des N moyens de translation (MEL11, ..., MEL1N) et le coupleur (CPL), chaque ligne-à-retard étant apte à retarder le signal translaté et multiplexé en fréquence par le moyen de translation auquel elle est associée, d'un retard temporel qui lui est propre.

6. Système selon la revendication précédente, dans lequel chaque retard $\tau_i$ de chaque ligne-à-retard, i variant entre 1 et N est défini tel que :

$$\tau_{i+1} \geq \tau_i + Max(LI + \tau_{prop}),$$

où :

   - LI est la largeur de l'impulsion considérée, retardée par la ligne de retard de rang i, et
   - $\tau_{prop}$ est le retard de propagation maximal entre deux antennes.

7. Système selon l'une des revendications précédentes, dans lequel ledit moyen de traitement (MTR) comprend en outre :

   - un moyen auxiliaire (DM) apte à regrouper les caractéristiques techniques délivrées par les analyseurs spectraux correspondant à une même onde incidente,
   - un moyen de caractérisation technique (MCTI) des impulsions, couplé en sortie du moyen auxiliaire (DM), apte à analyser techniquement chaque impulsion à partir des caractéristiques techniques délivrées par les analyseurs spectraux.

8. Utilisation d'un système selon l'une des revendications précédentes pour effectuer une goniométrie.

**Patentansprüche**

1. Empfangssystem (SYS), das einen Empfänger (REC) des Superheterodyn-Typs umfasst, der mit einem Verarbeitungsmittel (MTR) gekoppelt ist, wobei der Empfänger eine Anzahl N von Antennen ($V_1$,..., VN) umfasst, wobei jede ausgelegt ist zum Erfassen von Signalen, die eingehende Wellen in einem gegebenen Bereich von Interesse repräsentieren, und zum Liefern entsprechender Signale, wobei N eine ganze Zahl ist, **dadurch gekennzeichnet, dass** der Empfänger (REC) Folgendes umfasst:

   - N Umsetzmittel (MEL11, ..., MEL1N), jeweils ausgelegt zum:

      • Frequenzumsetzen von von der betrachteten Antenne zugeführten Signalen von einem Frequenzsubband des Bereichs von Interesse in ein beschränktes Frequenzband, und
      • Frequenzmultiplexieren der zu dem Frequenzsubband gehörenden Signale,

   - N erste Bandpassfilter von identischer Zwischenfrequenz (FPN11, ..., FP1N), deren Bandbreite gleich dem beschränkten Frequenzband ist, die jeweils am Ausgang jedes Umsetzmittels angeschlossen und zum Filtern der umgesetzten und multiplexierten Signale ausgelegt sind,
   - ein Kopplungsmittel (CPL) zum Summieren der N gefilterten Signale, um alle summierten Signal über N Ausgänge zuzuführen,

   und dadurch, dass das Verarbeitungsmittel (MTR) N weitere Umsetzmittel (MEL21, ..., MEL2N) umfasst, die an N weitere Bandpassfilter mit Zwischenfrequenzen angeschlossen sind, die untereinander identisch sind und sich von denen von den N ersten Bandpassfiltern (FPB21, ..., FPB2N) unterscheiden, und die eine Frequenzbandbreite gleich L haben, die wiederum mit N Spektralanalysatoren (AS1, ..., ASN) gekoppelt sind, die alle dasselbe beschränkte Analysefrequenzband mit Breite L haben,
   wobei jedes weitere Umsetzmittel (MEL21, ..., MEL2N) von Rang i, wobei i eine von 1 bis N variierende ganze Zahl ist, die von dem Kopplungsmittel (CPL) gelieferten Signale mit einem Umsetzsignal mit einer Frequenz transponieren kann, die an jedes der weiteren Umsetzmittel adaptiert ist, so dass das andere Bandpassfilter mit Zwischenfrequenz, das am Ausgang des weiteren Umsetzmittels angeschlossen ist, das i-te Subband des Gesamtfrequenzbandes von Breite L.N filtern kann, zu dem die von dem Kopplungsmittel (CPL) summierten Signale gehören.

2. System nach dem vorherigen Anspruch, wobei jeder Spektralanalysator (AS1, ..., ASN) auch die von den weiteren Bandpassfiltern mit Zwischenfrequenz (FPB21, ..., FPB2N) zugeführten Signale technisch analysieren und technische Charakteristiken zum Ausgang führen kann.

3. System nach einem der vorherigen Ansprüche, wobei jedes Umsetzmittel von Rang i die von der entsprechenden Antenne gelieferten Signale um einen Wert von:

$$f_0 + \Delta f_i,$$

frequenzumsetzen kann, wobei:

- $f_0$ ein allen Umsetzmitteln gemeinsamer Frequenzwert ist, und
- $\Delta f_i$ eine für jedes Umsetzmittel spezifische Frequenzverschiebung ist.

4. System nach dem vorherigen Anspruch, wobei die für jedes Umsetzmittel von Rang i (MEL11, ..., MEL1 N) spezifischen Verschiebungen $\Delta_{fi}$ wie folgt definiert sind:

$$\Delta f_{i+1} \geq \Delta f_i + \Delta f_{Spektrum,}$$

wobei

- $\Delta f_i$ die durch das Umsetzmittel von Rang i realisierte Frequenzverschiebung ist,
- $\Delta f_{i+1}$ die durch das Umsetzmittel von Rang i+1 realisierte Frequenzverschiebung ist, und
- $\Delta f_{Spektrum}$ die Breite des Spektrums der vom System benutzten Signale ist.

5. System nach einem der vorherigen Ansprüche, wobei der Empfänger (REC) ferner N Verzögerungsleitungen (LAR1, ..., LARN) umfasst, die jeweils zwischen dem Ausgang von einem der N Umsetzmittel (MEL11, ..., MEL1N) und dem Koppler (CPL) geschaltet sind, wobei jede Verzögerungsleitung das von dem Umsetzmittel, mit dem sie assoziiert ist, frequenzumgesetzte und -multiplexierte Signal um eine dafür spezifische Zeitverzögerung verzögern kann.

6. System nach dem vorherigen Anspruch, wobei jede Verzögerung $T_i$ jeder Verzögerungsleitung, wobei i zwischen 1 und N variiert, wie folgt definiert ist:

$$\tau_{i+1} \geq \tau_i + Max(LI + \tau_{prop}),$$

wobei:

- LI die Breite des betrachteten Impulses ist, die durch die Verzögerungsleitung von Rang i verzögert wurde, und
- $T_{prop}$ die maximale Ausbreitungsverzögerung zwischen zwei Antennen ist.

7. System nach einem der vorherigen Ansprüche, wobei das Verarbeitungsmittel (MTR) ferner Folgendes umfasst:

- ein Zusatzmittel (DM) zum Gruppieren der von den Spektralanalysatoren gelieferten technischen Charakteristiken, die derselben Eingangswelle entsprechen,
- ein mit dem Ausgang des Zusatzmittels (DM) gekoppeltes Mittel (MCTI) zum technischen Charakterisieren von Impulsen, ausgelegt zum technischen Analysieren jedes Impulses auf der Basis der von den Spektralanalysatoren gelieferten technischen Charakteristiken.

8. Verwendung eines Systems nach einem der vorherigen Ansprüche zum Durchführen von Goniometrie.

**Claims**

1. A reception system (SYS) comprising a receiver (REC) of the superheterodyne type, which is coupled to a processing means (MTR), said receiver comprising a number N of antennae ($V_1$,..., $V_N$) each being designed to capture signals representing incident waves over a given range of interest and to deliver corresponding signals, N being an integer, **characterised in that** said receiver (REC) comprises:

   - N translation means (MEL11, ..., MEL1N), each being designed:

      • to frequency translate signals delivered by the considered antenna from a frequency sub-band of the range of interest to a restricted frequency band, and
      • to frequency multiplex the signals belonging to said frequency sub-band,

   - N first bandpass filters of identical intermediate frequency (FPN11, ..., FP1N), the bandwidth of which is equal to said restricted frequency band, respectively coupled at the output of each translation means, and designed to filter the translated and multiplexed signals,
   - a coupling means (CPL) designed to sum the N filtered signals so as to deliver all of the summed signals via N outputs,

   and **in that** said processing means (MTR) comprises N other translation means (MEL21, ..., MEL2N) coupled to N other bandpass filters of intermediate frequencies that are identical with each other and different from the intermediate frequencies of the N first bandpass filters (FPB21, ..., FPB2N), and with a frequency bandwidth equal to L, themselves coupled to N spectral analysers (AS1, ..., ASN), all having the same restricted analysis frequency band of width L, wherein each other translation means (MEL21, ..., MEL2N) of rank i, i being an integer varying from 1 to N, is designed to transpose the signals delivered by the coupling means (CPL) using a translation signal having a frequency that is adapted to each of the other translation means, so that the other bandpass filter of intermediate frequency connected at the output of said other translation means is able to filter the i^th sub-band of the total frequency band of width L.N, to which the signals summed by the coupling means (CPL) belong.

2. The system according to the preceding claim, wherein each spectral analyser (AS1, ..., ASN) is also designed to technically analyse the signals filtered by the other bandpass filters of intermediate frequency (FPB21, ..., FPB2N) and to deliver technical characteristics as an output.

3. The system according to any one of the preceding claims, wherein each translation means of rank i is designed to frequency translate the signals delivered by the corresponding antenna by a value that is equal to:

$$f_{0} + \Delta f_{i,}$$

   where:

   - $f_0$ is a frequency value common to each of the translation means, and
   - $\Delta f_i$ is a frequency shift specific to each translation means.

4. The system according to the preceding claim, wherein the shifts $\Delta_{fi}$ specific to each translation means of rank i (MEL11, ..., MEL1N) are defined such that:

$$\Delta f_{i+1} \geq \Delta f_i + \Delta f_{spectrum,}$$

   where

   - $\Delta f_i$ is the frequency shift realised by the translation means of rank i,
   - $\Delta f_{i+1}$ is the frequency shift realised by the translation means of rank i+1, and
   - $\Delta f_{spectrum}$ is the width of the spectrum of the signals used by said system.

**5.** The system according to any one of the preceding claims, wherein the receiver (REC) further comprises N delay lines (LAR1, ..., LARN), respectively coupled between the output of one of the N translation means (MEL11, ..., MEL1N) and the coupler (CPL), each delay line being designed to delay the signal frequency translated and multiplexed by the translation means with which it is associated by a time delay specific thereto.

**6.** The system according to the preceding claim, wherein each delay $T_i$ of each delay line, with i varying between 1 and N, is defined such that:

$$\tau_{i+1} \geq \tau_i + \mathrm{Max}(Ll + \tau_{prop}),$$

where:

- LI is the width of the considered pulse, delayed by the delay line of rank i, and
- $T_{prop}$ is the maximum propagation delay between two antennae.

**7.** The system according to any one of the preceding claims, wherein said processing means (MTR) further comprises:

- an auxiliary means (DM) designed to group the technical characteristics delivered by the spectral analysers corresponding to the same incident wave,
- a means (MCTI) for technically characterising pulses, coupled at the output of the auxiliary means (DM), designed to technically analyse each pulse on the basis of the technical characteristics delivered by the spectral analysers.

**8.** The use of a system according to any one of the preceding claims for carrying out goniometry.

FIG.1

FIG.2

SYS

BRECj

GHz
10,5  13,2
10  14

FPS1j  Vj
AMPj
0,1 GHz
$f_{OL1j}=6\text{GHz}-\Delta f_j$
OL1j
FPB1j
4,6  7,3
4  8  GHz
LAR$_j$

FPS2j
$f_{OL2j}=6\text{GHz}$
OL2j
MEL2j
FPB2j
1,25  1,3
1  2  GHz

CPL
4,55  4,6  7,25  7,3
4  5  7  8  GHz

REC
BRECi

GHz
10,5  13,2
10  14

FPS1i  Vi
AMPi
0,05 GHz
$f_{OL1i}=6\text{GHz}-\Delta f_i$
OL1i
FPB1i
4,55  7,25
4  8  GHz
LAR$_i$

FPS2i
$f_{OL2i}=3\text{GHz}$
OL2i
MEL2i
FPB2i
1,55  1,6
1  2  GHz

FIG.3

FIG.4

FIG.5

## EP 2 504 926 B1

**Documents brevets cités dans la description**

- WO 2009013314 A